# FASCICULE DE BREVET EUROPEEN

(11) **EP 3 768 586 B1**
(45) Date de publication et mention de la délivrance du brevet: **24.06.2026**
(21) Numéro de dépôt: 19709529.2
(22) Date de dépôt: 14.03.2019
(51) Int. Cl.: B63B 1/10, B63B 1/12, B63B 35/44

(54) **FLOTTEUR SEMI-SUBMERSIBLE, NOTAMMENT POUR UNE ÉOLIENNE FLOTTANTE**
HALBTAUCHBARER SCHWIMMER, INSBESONDERE FÜR EINE SCHWIMMENDE WINDTURBINE
SEMI-SUBMERSIBLE FLOATER, PARTICULARLY FOR A FLOATING WIND TURBINE

(30) Priorité: 21.03.2018 FR 1852409
(43) Date de publication de la demande: 27.01.2021
(73) Titulaire: SAIPEM S.A, 92800 Puteaux (FR)
(72) Inventeur: HOUMARD LE GURUN, Anne, 56590 Groix (FR)
(74) Mandataire: Lavoix
(86) Numéro de dépôt international: PCT/EP2019/056461
(87) Numéro de publication internationale: WO 2019/179881

(56) Documents cités:
- WO-A1-2015/048147
- WO-A1-2016/172149
- WO-A1-2017/220878
- WO-A2-2004/050466
- US-A1- 2005 160 958

## Description

La présente invention concerne un flotteur semi-submersible, notamment pour une éolienne flottante.

La présente invention concerne également un procédé d'installation d'un tel flotteur semi-submersible.

De manière connue en soi, un flotteur semi-submersible comprend généralement une colonne centrale et au moins deux colonnes extérieures chacune reliée à la colonne centrale par une branche en forme de ponton.

Par exemple, le flotteur est configuré pour flotter sur une surface de la mer.

Le flotteur définit notamment un état opérationnel dans lequel il est situé sur son site d'exploitation en mer et ancré au fond marin. Dans cet état du flotteur, l'éolienne flottante est propre à générer de l'électricité. En outre, dans cet état, le flotteur semi-submersible présente un tirant d'eau prédéfini.

Ainsi, dans l'état opérationnel du flotteur semi-submersible, la colonne centrale confère de la flottabilité au flotteur. La colonne centrale présente notamment un volume immergé important mais qui ne compense pas le poids du mât, de la turbine et de la nacelle que reçoit la colonne centrale. Il en résulte que la colonne centrale est soumise à une force dirigée vers le bas, c'est-à-dire en direction du fond marin.

Les colonnes extérieures confèrent également de la flottabilité au flotteur semi-submersible et présentent un volume important immergé.

En particulier, leur flottabilité dépasse leur poids. Chaque colonne extérieure est donc soumise à une force résultante dirigée vers le haut, c'est-à-dire dans une direction opposée au fond marin. Il en résulte des efforts de traction dans la dalle basse de la colonne centrale et dans celle de la branche en forme de ponton correspondante.

Les branches en forme de ponton présentent également une flottabilité importante. Ceci entraîne des efforts tranchants importants au niveau de la jonction de chaque branche en forme de ponton avec la colonne centrale.

De plus, en fonctionnement, la turbine induit une poussée sur le flotteur semi-submersible. Cette poussée est notamment fonction de la puissance de l'éolienne flottante et doit être au moins en partie contrebalancée pour stabiliser le flotteur.

Les efforts appliqués sur le flotteur sont également dus aux sollicitations mécaniques induites par les conditions environnementales telles que le vent, la houle, le courant, que la turbine soit en fonctionnement ou non. Il en résulte une amplification dynamique de ces sollicitations mécaniques lorsque l'éolienne flottante est mise en mouvement sous l'effet des conditions environnementales.

Il est donc souhaitable d'équilibrer les forces s'appliquant sur le flotteur semi-submersible lorsque celui-ci est dans l'état opérationnel.

Un flotteur semi-submersible selon le préambule de la revendication 1 est divulgué dans le document WO2016/172149A1.

L'invention a pour but de proposer un flotteur semi-submersible présentant une stabilité particulièrement accrue lorsqu'il est dans l'état opérationnel.

A cet effet, la présente invention a pour objet un flotteur semi-submersible, notamment pour une éolienne flottante, tel que défini dans la revendication 1.

Autrement dit, dans l'état opérationnel du flotteur, la deuxième portion de chaque branche comprend le matériau de ballastage alors que la première portion ne comprend pas un tel matériau.

Suivant des modes de réalisation particuliers, le flotteur semi-submersible comprend une ou plusieurs des caractéristiques des revendications 2 à 9, prise(s) isolément ou suivant toute combinaison techniquement possible.

L'invention a également pour objet un procédé d'installation d'un flotteur semi-submersible, notamment pour une éolienne flottante, tel que défini dans la revendication 10.

D'autres caractéristiques et avantages de l'invention apparaîtront à la lecture de la description qui suit de modes de réalisation de l'invention, donnée à titre d'exemple uniquement en se référant aux dessins qui sont :
- la figure 1, une vue schématique en perspective d'un exemple d'éolienne flottante comprenant un flotteur semi-submersible selon l'invention, et
- la figure 2, une vue schématique en coupe du flotteur semi-submersible de la figure 1 selon le plan de coupe II-II indiqué sur la figure 1.

Dans la présente description une grandeur est sensiblement égale à une valeur V lorsque la grandeur est égale à plus ou moins 10% près la valeur V.

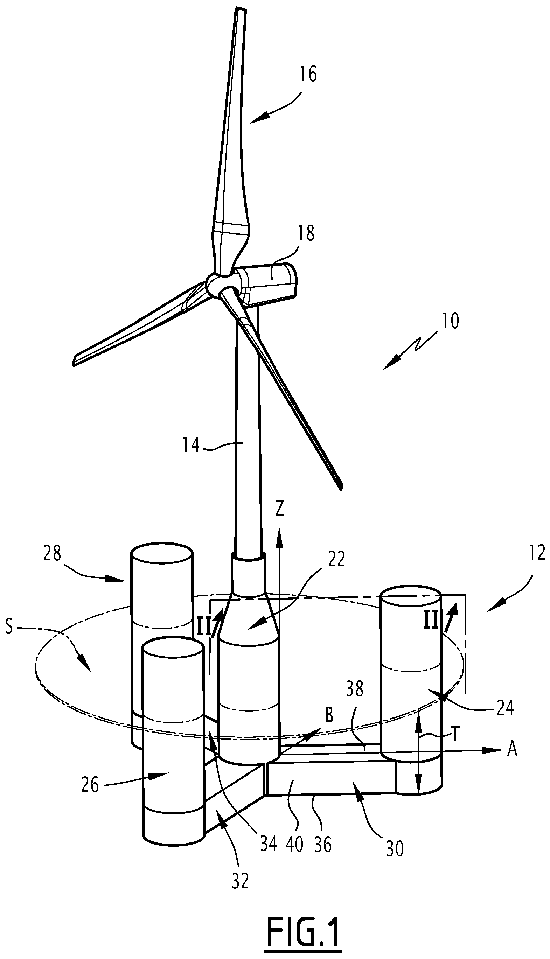

Une éolienne flottante 10 est représentée sur la figure 1.

En référence à cette figure, l'éolienne flottante 10 comprend un flotteur semi-submersible 12, au moins un mât 14, une turbine 16 et une nacelle 18 supportant au moins en partie la turbine 16.

Dans la suite de la présente demande le flotteur semi-submersible 12 est nommé « flotteur 12 ».

Le flotteur 12 est configuré pour flotter sur une surface S d'une étendue d'eau 20, telle que la surface de la mer.

Le flotteur 12 présente un état opérationnel et un état non-opérationnel.

Dans l'état opérationnel du flotteur 12, comme mentionné précédemment, le flotteur 12 est situé sur son site d'exploitation en mer et ancré, par exemple, au fond marin par un dispositif d'ancrage (non représenté sur les figures). En outre, dans l'état opérationnel du flotteur 12, l'éolienne flottante 10 est propre à générer de l'électricité. Il est en particulier entendu que dans l'état opérationnel du flotteur 12, la turbine 16 est en fonctionnement ou non. En outre, dans l'état opérationnel du flotteur 12, le flotteur 12 présente un tirant d'eau T prédéfini.

Le flotteur 12 illustré sur la figure 1 est dans l'état opérationnel.

Dans l'état non-opérationnel du flotteur 12, l'éolienne flottante 10 n'est pas propre à générer de l'électricité. Dans cet état, le flotteur 12 présente également un tirant d'eau prédéfini qui est inférieur au tirant d'eau T prédéfini du flotteur 12 dans l'état opérationnel. Par exemple, un état non-opérationnel du flotteur 12 correspond à une phase de remorquage du flotteur 12 depuis un port jusqu'à son site d'exploitation.

Le flotteur 12 comprend une colonne centrale 22 et au moins deux colonnes extérieures. En outre, pour chaque colonne extérieure, le flotteur 12 comprend une branche en forme de ponton raccordant cette colonne extérieure à la colonne centrale 22.

Dans l'exemple de réalisation de la figure 1, le flotteur 12 comprend trois colonnes extérieures 24, 26, 28 et donc, trois branches en forme de ponton 30, 32, 34.

Les colonnes extérieures 24, 26, 28 sont agencées en étoile autour de la colonne centrale 22 et, par exemple, régulièrement réparties angulairement autour de la colonne centrale 22. Ainsi, dans ce cas, l'angle entre chaque couple de branches en forme de ponton 30, 32, 34 est sensiblement égal à 120 degrés.

Selon encore un autre mode de réalisation, le flotteur 12 comprend deux colonnes extérieures. Dans ce cas, la colonne centrale forme le sommet d'un triangle isocèle et les deux autres sommets sont formés, respectivement, par une colonne extérieure. En outre, pour chaque colonne extérieure, une branche en forme de ponton raccorde la colonne centrale à cette colonne extérieure.

Selon un autre mode de réalisation, le flotteur 12 comprend quatre colonnes extérieures régulièrement réparties angulairement autour de la colonne centrale. Ainsi, l'angle entre deux branches en forme de ponton successives est sensiblement égal à 90 degrés. En outre, de manière analogue, pour chaque colonne extérieure, une branche en forme de ponton raccorde la colonne centrale à cette colonne extérieure.

Chaque branche en forme de ponton 30, 32, 34 définit un axe de branche A, orienté depuis la colonne centrale 22 vers la colonne extérieure 24, 26, 28 correspondante. Comme visible sur la figure 1, un axe de branche A est représenté pour la branche en forme de ponton 30.

La colonne centrale 22 définit un axe vertical Z, perpendiculaire à l'axe de branche A.

En outre, chaque branche en forme de ponton 30, 32, 34 définit un axe transversal B perpendiculaire à l'axe de branche A correspondant.

Comme visible sur la figure 1, la colonne centrale 22 est destinée à recevoir une charge utile. Dans le cas illustré d'une éolienne flottante, la charge utile comprend notamment le mât 14, la nacelle 18 et la turbine 16.

La colonne centrale 22 présente, par exemple, la forme d'un cylindre de section circulaire et d'axe vertical Z. Par exemple, le diamètre D1 de la colonne centrale 22 est égal à 10 mètres (m).

La colonne centrale 22 comprend une base 22A et une tête 22B.

La base 22A est agencée dans le prolongement de chaque branche en forme de ponton 30, 32, 34 selon l'axe de branche A correspondant. Par exemple, la base 22A est au moins partiellement en béton.

La tête 22B de la colonne centrale 22 est fixée sur la base 22A. La tête 22B et la base 22A sont coaxiales d'axe vertical Z. La tête 22B de la colonne centrale 22 est, par exemple, en acier.

Par exemple, la colonne centrale 22 présente une hauteur H1 selon la direction verticale Z comprise entre 30 m et 40 m.

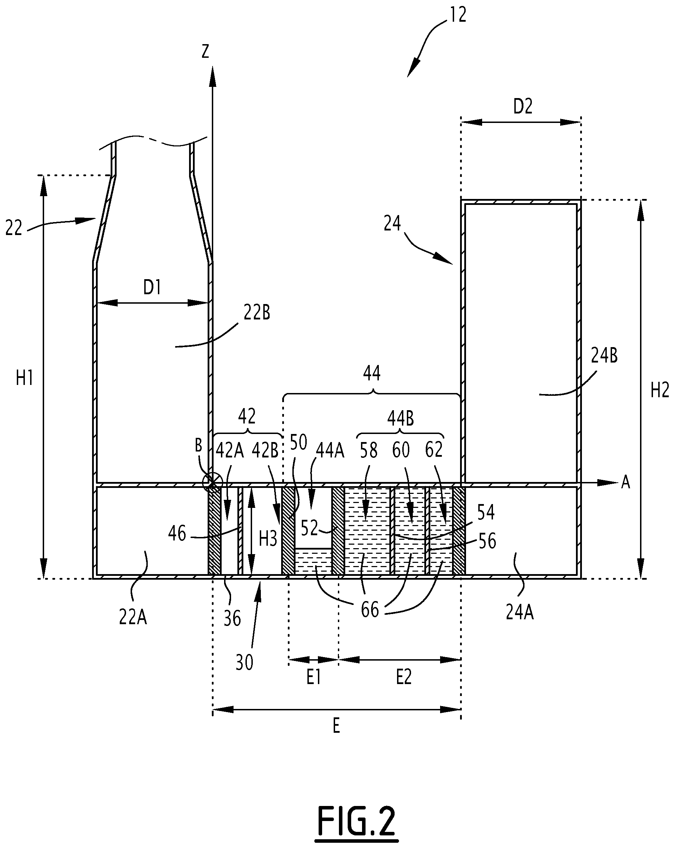

La suite de la description du flotteur 12 est réalisée en référence à la figure 2.

En outre, dans la suite, le flotteur 12 est décrit en relation avec la colonne centrale 22, l'une des colonnes extérieures 24 parmi les trois colonnes extérieures 24, 26, 28 et la branche en forme de ponton 30 reliant la colonne centrale 22 à cette colonne extérieure 24.

Ainsi, chaque autre colonne extérieure 26, 28 est analogue à la colonne extérieure 24 décrite dans la suite. En outre, chaque autre branche en forme de ponton 32, 34 est également analogue à la branche en forme de ponton 30 décrite dans la suite.

Tout comme la colonne centrale 22, la colonne extérieure 24 présente la forme d'un cylindre de section circulaire et d'axe vertical Z. A titre d'illustration, le diamètre D2 de la colonne extérieure 24 est compris entre 9 m et 9,5 m.

La colonne extérieure 24 comprend également une base 24A et une tête 24B.

La base 24A est disposée dans le prolongement de la branche en forme de ponton 30 selon l'axe de branche A. Par exemple, la base 24A est au moins partiellement en béton.

La tête 24B est fixée sur la base 24A correspondante. La tête 24B et la base 24A sont coaxiales d'axe vertical Z.

La colonne extérieure 24 présente une hauteur H2 suivant l'axe vertical Z comprise, par exemple, entre 30 m et 40 m.

La branche en forme de ponton 30 présente par exemple une forme parallélépipédique, délimitée par quatre dalles formant les faces du parallélépipède. Ainsi, cette branche 30 comprend une dalle basse 36, une dalle haute 38 et deux dalles latérales 40 reliant la dalle basse 36 et la dalle haute 38. Seule la dalle latérale 40 est visible sur la figure 1.

La branche en forme de ponton 30 est formée d'une première portion 42 et d'une deuxième portion 44 s'étendant successivement selon l'axe de branche A.

La branche en forme de ponton 30 définit une étendue totale E de cette branche 30. L'étendue totale E correspond à la longueur d'une ligne droite reliant les deux extrémités de cette branche 30 suivant l'axe de branche A.

A titre d'illustration, cette étendue totale E est comprise entre 20 m et 30 m.

La hauteur H3 de la branche en forme de ponton 30 suivant l'axe vertical Z est par exemple comprise entre 8 m et 9 m.

La largeur L de la branche en forme de ponton 30 suivant l'axe transversal B est, par exemple, sensiblement égale au diamètre D2 de la colonne extérieure 24.

La première portion 42 s'étend sur au moins 10% de l'étendue totale E de la branche en forme de ponton 30.

De préférence, la première portion 42 s'étend sur au moins 20% de l'étendue totale E de la branche en forme de ponton et avantageusement sur au moins 35% de l'étendue totale E de la branche en forme de ponton.

Plus précisément, la première portion 42 s'étend sur 20% à 70%, préférentiellement sur 35% à 45%, et avantageusement sur sensiblement 40% de l'étendue totale E de la branche en forme de ponton 30.

En outre, la première portion 42 est isolée de manière étanche de la colonne centrale 22 et plus précisément de la base 22A de la colonne centrale 22 ainsi que de la deuxième portion 44, par exemple, par une paroi étanche 50.

La deuxième portion 44 s'étend également sur au moins 10% de l'étendue totale E de la branche en forme de ponton 30.

Plus précisément, la deuxième portion 44 s'étend sur 30% à 80%, préférentiellement sur 55% à 65%, et avantageusement sur sensiblement 60% de l'étendue totale E de la branche en forme de ponton 30.

La deuxième portion 44 comprend un premier compartiment 44A et un deuxième compartiment 44B s'étendant successivement selon l'axe de branche A.

Le premier compartiment 44A présente une étendue E1 et le deuxième compartiment 44B présente une étendue E2. L'étendue E1 du premier compartiment 44A correspond à la longueur d'une ligne droite reliant les deux extrémités du premier compartiment 44A suivant l'axe de branche A. De même, l'étendue E2 du deuxième compartiment 44B correspond à la longueur d'une ligne droite reliant les deux extrémités du deuxième compartiment 44B suivant l'axe de branche A.

Le rapport de l'étendue E2 du deuxième compartiment 44B sur l'étendue E1 du premier compartiment 44A est compris, par exemple, entre 2 et 4. Plus précisément, le rapport est compris entre 2 et 3. Par exemple, le rapport est égal à 2,5.

Le premier compartiment 44A est isolé de manière étanche du deuxième compartiment 44B, par exemple par une paroi étanche 52. En outre, le deuxième compartiment 44B est isolé de manière étanche de la colonne extérieure 24 et plus précisément de la base 24A de la colonne extérieure 24.

Le deuxième compartiment 44B définit un volume total correspondant au volume de l'espace libre interne de la branche 30 délimité par les dalles 36, 38, 40, la paroi étanche 52 disposée entre la première et la deuxième portion 42, 44 et une paroi isolant le deuxième compartiment 44B de la colonne extérieure 24.

Ainsi, la deuxième portion 44B forme un ballast de réception d'un matériau de ballastage 66.

Par exemple, le matériau de ballastage 66 est de l'eau de mer.

En variante, le matériau de ballastage 66 comprend du sable, du gravier et/ou de la boue.

Selon un aspect avantageux de l'invention, la première portion 42 comprend une cloison interne 46 divisant la première portion 42 en deux parties 42A, 42B de première portion 42.

En outre, la deuxième portion 44 comprend, par exemple, deux cloisons internes 54, 56 divisant le deuxième compartiment 44B en trois parties 58, 60, 62 de compartiment. Dans ce cas, le volume total du deuxième compartiment 44B correspond à la somme des volumes des espaces libres internes des trois parties 58, 60, 62 de deuxième compartiment 42B

Selon un autre aspect avantageux de l'invention, la base 24A de la colonne extérieure 24 définit un ballast de réception du matériau de ballastage 66.

Dans ce cas, le ballast formé par la base 24A de la colonne extérieure 24 remplace par exemple le premier compartiment 44A de la deuxième portion 44 de la branche en forme de ponton 30. Autrement dit, la deuxième portion 44 ne comporte plus de premier compartiment 44A. Le ballast formé par la base 24A de la colonne extérieure 24 présente un volume total égal par exemple au volume de l'espace interne libre de cette base 24A.

Un procédé d'installation d'un flotteur 12 d'éolienne flottante dans l'état opérationnel est décrit dans la suite de la présente description.

Le procédé d'installation est également décrit en relation avec la colonne centrale 22, l'une des colonnes extérieures 24 parmi les trois colonnes extérieures 24, 26, 28 et la branche en forme de ponton 30 reliant la colonne centrale 22 à cette colonne extérieure 24.

Ainsi, les étapes du procédé décrites en relation avec la branche en forme de ponton 30 s'appliquent de la même manière pour chaque autre chaque autre branche en forme de ponton 32, 34 du flotteur 12.

Le procédé d'installation débute une fois le flotteur 12 est situé sur son site d'exploitation.

Initialement, la première et la deuxième portions 42, 44 sont dépourvues de matériau de ballastage 66.

Le procédé comprend une étape de remplissage lors de laquelle la deuxième portion 44 de la branche en forme de ponton 30 est au moins en partie remplie du matériau de ballastage 66.

Plus précisément, au cours de cette étape de remplissage, 40% à 60% du volume total du premier compartiment 44A de la deuxième portion 44 est rempli avec le matériau de ballastage 66. En outre, lors de cette même étape 80% à 100% du volume total du deuxième compartiment 44B est rempli avec le matériau de ballastage 66.

Le procédé comprend, en outre, une étape au cours de laquelle la première portion 42 de la branche en forme de ponton 30 est laissée vide de matériau de ballastage.

Dans cet exemple, la colonne centrale 22 et la colonne extérieure 24 sont également laissées vide de matériau de ballastage 66.

Selon un autre exemple de réalisation du procédé, lorsque la base 24A de la colonne extérieure 24 forme un ballast et la deuxième portion 44 est dépourvue de premier compartiment 44A, au cours de l'étape de remplissage, 80% à 100% du volume total du deuxième compartiment 44B de la deuxième portion 44 est rempli par le matériau de ballastage 66 et 40% à 60% du volume total du ballast de la colonne extérieure 24 est rempli par le matériau de ballastage 66.

Le fait de remplir au moins en partie la deuxième portion 44 de matériau de ballastage 66 et de laisser vide de tout matériau de ballastage 66 la première portion 42 permet d'obtenir un flotteur 12 dans l'état opérationnel présentant une stabilité accrue.

Le remplissage de la deuxième portion 44 permet, en particulier, d'ajuster la raideur hydrostatique à laquelle est soumise le flotteur 12, afin de résister à la poussée de la turbine 16 de l'éolienne flottante 10.

En outre, lorsque la deuxième portion 44 est remplie de matériau de ballastage, les forces au sein du flotteur 12 liées à la structure elle-même du flotteur 12 sont équilibrées, notamment par l'ajustement du tirant d'eau.

Plus précisément, le fait de remplir la deuxième portion 44 permet d'équilibrer les efforts tranchants et de flexion au niveau de la jonction entre la branche en forme de ponton 30 et la colonne centrale 22 car le poids de la deuxième portion 44 devient plus important que la poussée hydrostatique à laquelle elle est soumise. En particulier, le fait de remplir 80% à 100% du volume total du deuxième compartiment 44B avec le matériau de ballastage 66 permet d'augmenter le poids de la portion de la branche en forme de ponton 30 la plus proche de la colonne extérieure 24 afin de compenser la flottabilité importante de la colonne extérieure 24.

De plus, le fait de remplir la deuxième portion 44 a aussi pour avantage d'équilibrer les efforts de traction auxquels sont soumises la dalle basse 36 de la branche en forme de ponton 30 et celle de la colonne centrale 22.

En outre, la deuxième portion 44 de la branche en forme de ponton 30 est la portion de cette branche qui est la plus soumise aux variations de pression hydrostatique et hydrodynamique lorsque l'éolienne 10 penche. Ainsi, le fait de remplir la deuxième portion 44 de la branche en forme de ponton 30 permet de diminuer la différence de pression entre l'intérieur et l'extérieur de cette branche. Ceci réduit alors l'effet de « membrane » des dalles 36, 38, 40 constituant la branche 30.

Dans l'exemple de réalisation dans lequel le premier compartiment 44A est rempli de matériau de ballastage, du fait du remplissage de ce premier compartiment 44A, l'évolution des efforts tranchants est plus progressive le long de la branche en forme de ponton 30 selon l'axe de branche A correspondant.

En outre, lorsque le premier compartiment 44A est rempli avec le matériau de ballastage 66, ce compartiment 44A présente une flottabilité et un poids qui se compensent.

Dans l'exemple de réalisation dans lequel la base 24A de la colonne extérieure 24 forme un ballast, une stabilité accrue du flotteur 12 est obtenue en remplissant au moins partiellement ce ballast.

Finalement, les parois étanches 50, 52 et les cloisons internes 46, 54, 56 augmentent la résistance de la branche 30 à la pression de l'eau de mer auquel elle est soumise. De plus, les parois internes 54, 56 du deuxième compartiment 44B permettent de s'affranchir des effets de carène liquide lorsque le matériau de ballastage 66 est au moins en partie liquide.

## Revendications

1. Flotteur semi-submersible (12), notamment pour une éolienne flottante (10), définissant un état opérationnel et un état non-opérationnel, et comportant :
- au moins deux colonnes extérieures (24, 26, 28),
- une colonne centrale (22) destinée à recevoir une charge utile (14, 16, 18), et
- pour chaque colonne extérieure (24, 26, 28), une branche en forme de ponton (30, 32, 34) raccordant cette colonne extérieure (24, 26, 28) à la colonne centrale (22) et définissant un axe de branche (A) orienté depuis la colonne centrale (22) vers cette colonne extérieure (24, 26, 28),
chaque branche en forme de ponton (30, 32, 34) est formée d'une première portion (42) et d'une deuxième portion (44) s'étendant successivement selon l'axe de branche (A) correspondant, où
dans l'état opérationnel du flotteur semi-submersible (12), la deuxième portion (44) de chaque branche (30, 32, 34) comprend un matériau de ballastage (66), et en ce que la première portion (42) est dépourvue de matériau de ballastage (66),
et où chaque deuxième portion (44) comprend un premier compartiment (44A) et un deuxième compartiment (44B) s'étendant successivement selon l'axe de branche (A),
**caractérisé en ce que**
chacune desdites première portion (42) et deuxième portion (44) s'étendant sur au moins 10% de l'étendue totale (E) de cette branche en forme de ponton (30, 32, 34), selon cet axe de branche (A), et
dans l'état opérationnel du flotteur semi-submersible (10), le volume du matériau de ballastage (66) de chaque premier compartiment (44A) est compris entre 40% et 60% du volume total de ce compartiment (44A) et le volume du matériau de ballastage (66) de chaque deuxième compartiment (44B) est compris entre 80% et 100% du volume total de ce compartiment (44B).

2. Flotteur semi-submersible (12) selon la revendication 1, dans lequel chaque colonne extérieure (24, 26, 28) comprend un ballast (24A) propre à être rempli d'un matériau de ballastage (66), agencé dans le prolongement de la branche en forme de ponton (30, 32, 36) reliant la colonne centrale (22) à cette colonne extérieure (24, 26, 28) selon l'axe de branche (A) correspondant, et dans lequel,
dans l'état opérationnel du flotteur semi-submersible (12), le volume du matériau de ballastage (66) du ballast (24A) de chaque colonne extérieure (24, 26, 28) est compris entre 40% et 60% du volume total de ce ballast (24A).

3. Flotteur semi-submersible (12) selon la revendication 2, dans lequel le volume du matériau de ballastage (66) de la deuxième portion (44) de chaque branche en forme de ponton (30, 32, 34) est compris entre 80% et 100% du volume total de cette portion (44).

4. Flotteur semi-submersible selon la revendication 1 ou 2, dans lequel le rapport de l'étendue (E2) du deuxième compartiment (44B) de la deuxième portion (44) de chaque branche en forme de ponton (30, 32, 34) selon l'axe de branche (A) correspondant sur l'étendue (E1) du premier compartiment (44A) de la deuxième portion (44) de cette même branche (30, 32, 34) selon l'axe de branche (A) correspondant, est compris entre 2 et 4.

5. Flotteur semi-submersible (12) selon la revendication 1 ou 2 ou 5, dans lequel chaque deuxième portion (44) comprend au moins une cloison interne (54, 56) agencée dans le deuxième compartiment (44B) de cette portion (44), la cloison interne (54, 56) divisant ce compartiment (44B) en au moins deux parties (58, 60, 62) de compartiment (44B).

6. Flotteur semi-submersible (12) selon l'une quelconque des revendications précédentes, dans lequel la deuxième portion (44) de chaque branche en forme de ponton (24, 26, 28) s'étend sur 30% à 80% de l'étendue totale (E) de cette branche (30, 32, 34), selon l'axe de branche (A) correspondant.

7. Flotteur semi-submersible (12) selon l'une quelconque des revendications précédentes, dans lequel la première portion (42) de chaque branche en forme de ponton (30, 32, 36) est isolée de manière étanche de la deuxième portion (44) de cette branche (30, 32, 34).

8. Flotteur semi-submersible (12) selon l'une quelconque des revendications précédentes, dans lequel la colonne centrale (22) est dépourvue de ballast.

9. Flotteur semi-submersible (12) selon l'une quelconque des revendications précédentes, dans lequel le matériau de ballastage (66) comprend au moins l'un des matériaux de la liste suivante :
- de l'eau de mer,
- de la boue,
- du sable,
- du gravier.

10. Procédé d'installation d'un flotteur semi-submersible (12), notamment pour une éolienne flottante (10), le flotteur semi-submersible (12) définissant un état opérationnel et un état non-opérationnel, et comportant :
- au moins deux colonnes extérieures (24, 26, 28),
- une colonne centrale (22) destinée à recevoir une charge utile (14, 16, 18), et
- pour chaque colonne extérieure (24, 26, 28), une branche en forme de ponton (30, 32, 34) raccordant cette colonne extérieure (24, 26, 28) à la colonne centrale (22) et définissant un axe de branche (A) orienté depuis la colonne centrale (22) vers cette colonne extérieure (24, 26, 28),
chaque branche en forme de ponton (30, 32, 34) est formée d'une première portion (42) et d'une deuxième portion (44) s'étendant successivement selon l'axe de branche (A) correspondant, chacune sur au moins 10% de l'étendue totale (E) de cette branche en forme de ponton (30, 32, 34), selon cet axe de branche (A), chaque deuxième portion (44) comprenant un premier compartiment (44A) et un deuxième compartiment (44B) s'étendant successivement selon l'axe de branche (A) et dans lequel,
le procédé étant **caractérisé en ce qu'**il comprend les étapes suivantes pour la mise en l'état opérationnel du flotteur semi-submersible (12) :
- remplir au moins en partie la deuxième portion (44) de chaque branche en forme de ponton (30, 32, 36) avec un matériau de ballastage (66), le volume du matériau de ballastage (66) de chaque premier compartiment (44A) est compris entre 40% et 60% du volume total de ce compartiment (44A) et le volume du matériau de ballastage (66) de chaque deuxième compartiment (44B) est compris entre 80% et 100% du volume total de ce compartiment (44B), et
- laisser vide de matériau de ballastage la première portion (42) de chaque branche en forme de ponton (30, 32, 36).

## Patentansprüche

1. Halbtauchbarer Schwimmer (12), insbesondere für eine schwimmende Windturbine (10), der einen Betriebszustand und einen Nichtbetriebszustand definiert und Folgendes umfasst:
- mindestens zwei äußere Säulen (24, 26, 28),
- eine mittlere Säule (22), die dazu bestimmt ist, eine Nutzlast (14, 16, 18) aufzunehmen, und
- für jede äußere Säule (24, 26, 28) einen pontonartigen Zweig (30, 32, 34), der diese äußere Säule (24, 26, 28) mit der mittleren Säule (22) verbindet und eine Zweigachse (A) definiert, die von der mittleren Säule (22) zu dieser äußeren Säule (24, 26, 28) gerichtet ist,
wobei jeder pontonartigen Zweig (30, 32, 34) aus einem ersten Abschnitt (42) und einem zweiten Abschnitt (44) gebildet ist, die sich nacheinander entlang der entsprechenden Zweigachse (A) erstrecken, wobei
in dem Betriebszustand des halbtauchbaren Schwimmers (12) der zweite Abschnitt (44) von jedem Zweig (30, 32, 34) ein Ballastmaterial (66) umfasst, und dass der erste Abschnitt (42) frei von Ballastmaterial (66) ist,
und wobei
jeder zweite Abschnitt (44) eine erste Kammer (44A) und eine zweite Kammer (44B) umfasst, die sich aufeinanderfolgend entlang der Zweigachse (A) erstrecken,
**dadurch gekennzeichnet, dass**
sich jeder von dem ersten Abschnitt (42) und dem zweiten Abschnitt (44) über mindestens 10 % der gesamten Ausdehnung (E) dieses pontonförmigen Zweigs (30, 32, 34) entlang dieser Zweigachse (A) erstreckt, und
in dem Betriebszustand des halbtauchbaren Schwimmers (10) das Volumen des Ballastmaterials (66) jeder ersten Kammer (44A) zwischen 40 % und 60 % des Gesamtvolumens dieser Kammer (44A) liegt und das Volumen des Ballastmaterials (66) jeder zweiten Kammer (44B) zwischen 80 % und 100 % des Gesamtvolumens dieser Kammer (44B) liegt.

2. Halbtauchbarer Schwimmer (12) nach Anspruch 1, wobei jede äußere Säule (24, 26, 28) einen Ballast (24A) umfasst, der geeignet ist, um mit einem Ballastmaterial (66) gefüllt zu werden und in der Verlängerung des pontonförmigen Zweigs (30, 32, 36) angeordnet ist, der die mittlere Säule (22) mit dieser äußeren Säule (24, 26, 28) entlang der entsprechenden Zweigachse (A) verbindet, und wobei
in dem Betriebszustand des halbtauchbaren Schwimmers (12) das Volumen des Ballastmaterials (66) des Ballasts (24A) jeder äußeren Säule (24, 26, 28) zwischen 40 % und 60 % des Gesamtvolumens dieses Ballasts (24A) liegt.

3. Halbtauchbarer Schwimmer (12) nach Anspruch 2, wobei das Volumen des Ballastmaterials (66) des zweiten Abschnitts (44) jedes pontonförmigen Zweigs (30, 32, 34) zwischen 80 % und 100 % des Gesamtvolumens dieses Abschnitts (44) liegt.

4. Halbtauchbarer Schwimmer nach Anspruch 1 oder 2, wobei das Verhältnis der Ausdehnung (E2) der zweiten Kammer (44B) des zweiten Abschnitts (44) jedes pontonförmigen Zweigs (30, 32, 34) entlang der entsprechenden Zweigachse (A) zur Ausdehnung (E1) der ersten Kammer (44A) des zweiten Abschnitts (44) desselben Zweigs (30, 32, 34) entlang der entsprechenden Zweigachse (A) zwischen 2 und 4 liegt.

5. Halbtauchbarer Schwimmer (12) nach Anspruch 1 oder 2 oder 5, wobei jeder zweite Abschnitt (44) mindestens ein inneres Schott (54, 56) umfasst, das in der zweiten Kammer (44B) dieses Abschnitts (44) angeordnet ist, wobei das innere Schott (54, 56) diese Kammer (44B) in mindestens zwei Abteilungsteile (58, 60, 62) der Kammer (44B) unterteilt.

6. Halbtauchbarer Schwimmer (12) nach einem der vorherigen Ansprüche, wobei sich der zweite Abschnitt (44) jedes pontonförmigen Zweigs (24, 26, 28) von 30 % bis 80 % der Gesamtausdehnung (E) dieses Zweigs (30, 32, 34) entlang der entsprechenden Zweigachse (A) erstreckt.

7. Halbtauchbarer Schwimmer (12) nach einem der vorherigen Ansprüche, wobei der erste Abschnitt (42) jedes pontonförmigen Zweigs (30, 32, 36) wasserdicht von dem zweiten Abschnitt (44) dieses Zweigs (30, 32, 34) isoliert ist.

8. Halbtauchbarer Schwimmer (12) nach einem der vorherigen Ansprüche, wobei die mittlere Säule (22) keinen Ballast aufweist.

9. Halbtauchbarer Schwimmer (12) nach einem der vorherigen Ansprüche, wobei das Ballastmaterial (66) mindestens eines der Materialien aus der folgenden Liste umfasst:
- Meerwasser,
- Schlamm,
- Sand,
- Kies.

10. Verfahren zur Installation eines halbtauchbaren Schwimmers (12), insbesondere für eine schwimmende Windturbine (10), wobei der halbtauchbare Schwimmer (12) einen Betriebszustand und einen Nicht-Betriebszustand definiert und umfassend:
- mindestens zwei äußere Säulen (24, 26, 28),
- eine mittlere Säule (22), die dazu bestimmt ist, eine Nutzlast (14, 16, 18) aufzunehmen, und
- für jede äußere Säule (24, 26, 28) einen pontonartigen Zweig (30, 32, 34), der diese äußere Säule (24, 26, 28) mit der mittleren Säule (22) verbindet und eine Zweigachse (A) definiert, die von der mittleren Säule (22) zu dieser äußeren Säule (24, 26, 28) gerichtet ist,
jeder pontonförmige Zweig (30, 32, 34) aus einem ersten Abschnitt (42) und einem zweiten Abschnitt (44) gebildet ist, die sich nacheinander entlang der jeweiligen Zweigachse (A) erstrecken, wobei jeder Abschnitt mindestens 10 % der Gesamtausdehnung (E) dieses pontonförmigen Zweigs (30, 32, 34) entlang der Zweigachse (A) umfasst, jeder zweite Abschnitt (44) umfassend eine erste Kammer (44A) und eine zweite Kammer (44B), die sich nacheinander entlang der Zweigachse (A) erstrecken, und wobei
das Verfahren **dadurch gekennzeichnet ist, dass** es die folgenden Schritte umfasst, um den halbtauchbaren Schwimmer (12) in den Betriebszustand zu versetzen:
- zumindest teilweises Füllen des zweiten Abschnitts (44) jedes pontonförmigen Zweigs (30, 32, 36) mit einem Ballastmaterial (66), wobei das Volumen des Ballastmaterials (66) in jeder ersten Kammer (44A) zwischen 40 % und 60 % des Gesamtvolumens dieses Abteils (44A) liegt und das Volumen des Ballastmaterials (66) in jeder zweiten Kammer (44B) zwischen 80 % und 100 % des Gesamtvolumens dieser Kammer (44B) liegt, und
- Leerlassen des ersten Abschnitts (42) jedes pontonförmigen Zweigs (30, 32, 36) von Ballastmaterial.

## Claims

1. A semi-submersible floater (12), in particular for a floating wind turbine (10), defining an operating state and a non-operating state, and comprising:
- at least two outer columns (24, 26, 28),
- a central column (22) for receiving a payload (14, 16, 18), and
- for each outer column (24, 26, 28), a pontoon-shaped branch (30, 32, 34) connecting this outer column (24, 26, 28) to the central column (22) and defining a branch axis (A) oriented from the central column (22) towards this outer column (24, 26, 28),
each pontoon-shaped branch (30, 32, 34) is formed by a first portion (42) and a second portion (44) that extend successively along the corresponding branch axis (A),
wherein in the operating state of the semi-submersible floater (12), the second portion (44) of each branch (30, 32, 34) comprises a ballast material (66), and in that the first portion (42) does not contain any ballast material (66),
and wherein each second portion (44) comprises a first compartment (44A) and a second compartment (44B) extending successively along the branch axis (A),
**characterized in that**
each one of the first portion (42) and the second portion (44) extending over at least 10% of the total extent (E) of said pontoon-shaped branch (30, 32, 34), along this branch axis (A), and,
in the operating state of the semi-submersible floater (10), the volume of the ballast material (66) of each first compartment (44A) is between 40% and 60% of the total volume of this compartment (44A) and the volume of the ballast material (66) of each second compartment (44B) is between 80% and 100% of the total volume of this compartment (44B).

2. The semi-submersible floater (12) according to claim 1, wherein each outer column (24, 26, 28) comprises a ballast (24A) able to be filled with a ballast material (66), arranged in the extension of the pontoon-shaped branch (30, 32, 36) connecting the central column (22) to this outer column (24, 26, 28) along the corresponding branch axis (A), and wherein,
in the operating state of the semi-submersible floater (12), the volume of the ballast material (66) of the ballast (24A) of each outer column (24, 26, 28) is between 40% and 60% of the total volume of this ballast (24A).

3. The semi-submersible floater (12) according to claim 2, wherein the volume of the ballast material (66) of the second portion (44) of each pontoon-shaped branch (30, 32, 34) is between 80% and 100% of the total volume of this portion (44).

4. The semi-submersible floater according to claim 1 or 2, wherein the ratio of the extent (E2) of the second compartment (44B) of the second portion (44) of each pontoon-shaped branch (30, 32, 34) along the corresponding branch axis (A) to the extent (E1) of the first compartment (44A) of the second portion (44) of this same branch (30, 32, 34) along the corresponding branch axis (A), is between 2 and 4.

5. The semi-submersible floater (12) according to claim 1 or 2 or 5, wherein each second portion (44) comprises at least one inner partition (54, 56) arranged in the second compartment (44B) of this portion (44), the inner partition (54, 56) dividing this compartment (44B) into at least two compartment (44B) parts (58, 60, 62).

6. The semi-submersible floater (12) according to any one of the preceding claims, wherein the second portion (44) of each pontoon-shaped branch (24, 26, 28) extends over 30% to 80% of the total extent (E) of this branch (30, 32, 34), along the corresponding branch axis (A).

7. The semi-submersible floater (12) according to any one of the preceding claims, wherein the first portion (42) of each pontoon-shaped branch (30, 32, 36) is tightly isolated from the second portion (44) of this branch (30, 32, 34).

8. The semi-submersible floater (12) according to any one of the preceding claims, wherein the central column (22) does not contain any ballast.

9. The semi-submersible floater (12) according to any one of the preceding claims, wherein the ballast material (66) comprises at least one of the materials from the following list:
- seawater,
- mud,
- sand,
- gravel.

10. A method for installing a semi-submersible floater (12), in particular for a floating wind turbine (10), the semi-submersible floater (12) defining an operating state and a non-operating state, and comprising:
- at least two outer columns (24, 26, 28),
- a central column (22) for receiving a payload (14, 16, 18), and
- for each outer column (24, 26, 28), a pontoon-shaped branch (30, 32, 34) connecting this outer column (24, 26, 28) to the central column (22) and defining a branch axis (A) oriented from the central column (22) towards this outer column (24, 26, 28),
each pontoon-shaped branch (30, 32, 34) is formed by a first portion (42) and a second portion (44) that extend successively along the corresponding branch axis (A), each one over at least 10% of the total extent (E) of said pontoon-shaped branch (30, 32, 34), along this branch axis (A), each second portion (44) comprising a first compartment (44A) and a second compartment (44B) extending successively along the branch axis (A), and wherein,
the method being **characterized in that** it comprises the following steps for placing the semi-submersible floater (12) in the operating state:
- filling the second portion (44) of each pontoon-shaped branch (30, 32, 36) at least partially with a ballast material (66), the volume of the ballast material (66) of each first compartment (44A) is between 40% and 60% of the total volume of this compartment (44A) and the volume of the ballast material (66) of each second compartment (44B) is between 80% and 100% of the total volume of this compartment (44B), and
- leaving the first portion (42) of each pontoon-shaped branch (30, 32, 36) empty of ballast material.
